# EUROPEAN PATENT SPECIFICATION

(11) **EP 3 572 287 B1**
(45) Date of publication and mention of the grant of the patent: **13.01.2021**
(21) Application number: 18173495.5
(22) Date of filing: 22.05.2018
(51) Int. Cl.: B60R 11/04

(54) **A CARRIER ARRANGEMENT FOR MOUNTING A CAMERA UNIT ON A VEHICLE, AND A METHOD FOR INSTALLING SUCH A CARRIER ARRANGEMENT**
TRÄGERANORDNUNG ZUR MONTAGE EINER KAMERAEINHEIT AN EINEM FAHRZEUG UND VERFAHREN ZUR INSTALLATION SOLCH EINER TRÄGERANORDNUNG
AGENCEMENT DE SUPPORT DE MONTAGE D'UNE UNITÉ DE CAMÉRA SUR UN VÉHICULE ET PROCÉDÉ POUR INSTALLER UN TEL AGENCEMENT DE SUPPORT

(43) Date of publication of application: 27.11.2019
(73) Proprietor: Veoneer Sweden AB, 447 83 Vårgårda (SE)
(72) Inventor: ALM, Gustav, 582 33 Linköping (SE)
(74) Representative: Andersson, Per Rune

(56) References cited:
- EP-A1- 2 965 949
- DE-A1-102013 005 801
- JP-A- 2016 190 616

## Description

### DESCRIPTION OF THE DISCLOSURE

The present disclosure relates to a carrier arrangement for mounting a camera unit on a vehicle, said carrier arrangement comprising a base plate configured to be attached to a windshield of said vehicle and a support device for carrying said camera unit. The support device and the base plate are associated with a fastening arrangement for attaching the support device to the base plate.

The disclosure also relates to a method for installing a carrier arrangement for a camera unit in a vehicle, said method comprising the steps of attaching a base plate to a windshield of said vehicle and mounting a support device to said base plate by means of a fastening arrangement.

Today, there exist different types of detection and sensor systems for road vehicles, by means of which various objects in the surroundings of the vehicles can be detected and analyzed. For this reason, such detection systems may comprise camera units for providing images and video sequences. Alternatively, such detection system may comprise equipment such as radar systems, navigation systems, Lidar systems and other sensors.

Furthermore, such systems can be used in connection with, for example, automated vehicle systems for speed control and collision prevention, and also in the field of autonomously driving vehicles.

According to prior technology, a carrier arrangement can be used for supporting a camera unit or similar type of equipment. Such a carrier arrangement can be positioned on the inside of a windshield of a vehicle. This means that the camera unit can be positioned in a suitable position in the vehicle, supported by the carrier arrangement and configured with a given detection area ahead of the vehicle or around the vehicle.

According to prior art, it is previously known to use a carrier arrangement comprising a frame which is attached to a vehicle windshield and which is also connected to a support device which is attached to the frame. The support device comprises suitable attachment means which are configured for supporting the camera unit. The carrier arrangement is suitably attached to the windscreen by means of a suitable adhesive.

A previously known carrier arrangement of the above-mentioned type is known from the patent document US 2017/0240120. This document discloses an arrangement comprising a base plate which is configured to be attached to the inside of a windshield and also comprising a support device which is configured to support a housing of a camera unit.

Even though the arrangement according to US 2017/0240120 is configured for being mounted in a vehicle and for holding a camera unit in a reliable manner, there is a need for further improvements within this field of technology. In particular, there is a demand for improvements in order to minimize the required space within the vehicle for such a carrier arrangement. This means that it is necessary to attach the carrier arrangement as close to the windshield as possible, in order to intrude as little as possible on the available space in the vehicle compartment. A further requirement, which is relevant during transport of windshields intended to be mounted on vehicles, is to minimize the height of such stacks of windshields having brackets mounted on them.

JP2016-190616 A discloses a carrier arrangement according to the preamble of claim 1.

For the above-mentioned reasons, it is an object of the present disclosure to provide a carrier arrangement for a camera unit by means of which the above-mentioned drawbacks of the prior art can be solved.

In accordance with the disclosure, said object is achieved by means of a carrier arrangement for mounting a camera unit on a vehicle according to claim 1.

Said object is also achieved by means of a method for installing a carrier arrangement for a camera unit in a vehicle according to claim 11.

A number of advantages are obtained by means of the present disclosure. Mainly, the carrier arrangement will be positioned closer to the windshield than previously known arrangements, which means that the carrier arrangement defines a highly compact unit which occupies very little space in the vehicle compartment. Also, due to the fact that the carrier arrangement is attached very close to the windshield, the available height for tall persons to have a good view out through the windshield can be increased. Also, when a number of windshields with the above-mentioned carrier arrangement is transported, the height of a stack of windshields can be minimized, which means that an increased number of windshields can be stored in a given space as compared with prior art.

The carrier arrangement according to the disclosure is suitably used with a road vehicle such as a car, truck or other road vehicle, but can also in principle be used with any other vehicle having a windshield adapted for mounting the above-mentioned carrier arrangement on an interior side of the windshield.

Other aspects of the present disclosure are disclosed in the dependent claims.

According to some aspects, each pin is shaped with a cross-section having an upper section and a lower section which are divided by means of a horizontal plane, said upper section of the cross-section having a first radius and said lower section of the cross-section having a second radius which is different from the first radius.

According to some aspects, the first radius is in the magnitude of 3,0 mm and the second radius is in the magnitude of 2,9 mm.

According to some aspects, each of said pins is shaped with a tapering end section.

According to some aspects, each of said fastening units is flexible in a direction along the extension of each corresponding pin when being forced by said pin.

According to the invention, each fastening unit has an opening which is configured for fitting a corresponding pin.

According to the invention, each fastening unit comprises a central section and two side sections on each side of the central section, said central section being resilient and configured for flexing during mounting of a corresponding pin.

According to the invention, each central section comprises a further opening in the central section, said further opening being configured for allowing expansion of said hole during mounting of the pin.

According to some aspects, said central section comprises a tapering end surface configured for being in contact with the pin during mounting thereof so as to allow said flexing. According to some aspects, said support device comprises a cooling arrangement.

According to some aspects, said support device comprises a holder which is configured for supporting said camera unit.

According to some aspects, said base plate is provided with an adhesive for fixing it to said windshield.

According to some aspects, the fastening units are arranged on the underside of the base plate.

According to some aspects, the pins are arranged along the periphery of said support device.

### BRIEF DESCRIPTION OF THE DRAWINGS

The present disclosure will now be described more in detail with reference to the appended drawings, where:
- Figure 1: shows a perspective view of a front part of a vehicle;
- Figure 2: shows a perspective view of a carrier arrangement according to the present disclosure;
- Figure 3: shows the carrier arrangement in a view as regarded from behind, i.e. as viewed towards the front of the vehicle;
- Figure 4: shows the carrier arrangement in a view as regarded from below;
- Figure 5: shows a fastening arrangement which forms part of the carrier arrangement;
- Figure 6: shows a further view of the fastening arrangement, including a locking pin which forms part of a support device and a fastening unit;
- Figure 7: shows a view corresponding to Figure 6 but in a condition in which the locking pin is locked to the fastening unit;
- Figure 8: shows a further view of a fastening unit; and
- Figure 9: shows a cross-sectional view of a locking pin.

### DETAILED DESCRIPTION

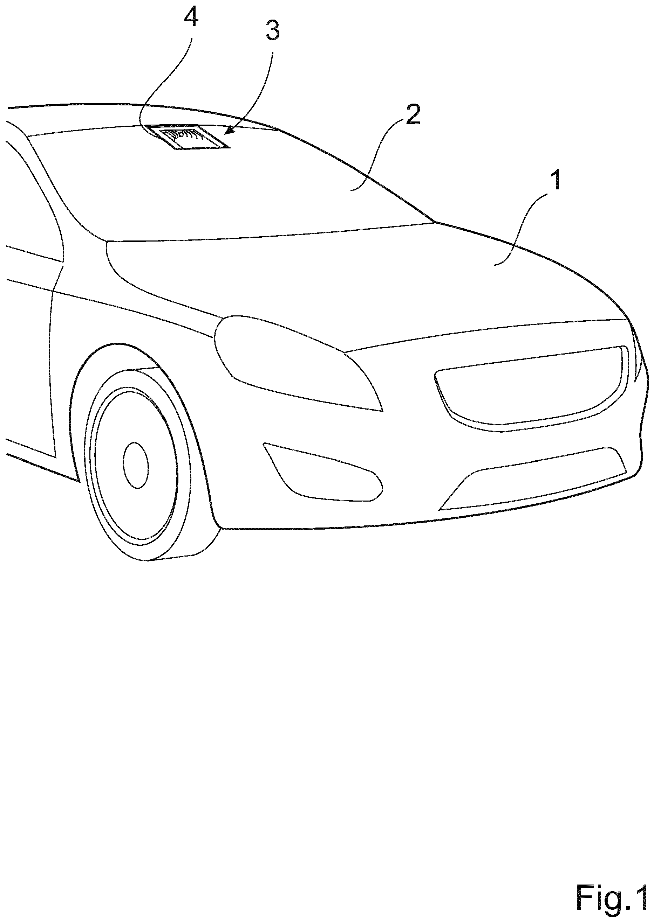

Figure 1 schematically shows a perspective view of a vehicle 1, which according to an embodiment is a regular car, having a windshield 2. According to an embodiment, the disclosure relates to a carrier arrangement 3 which is mounted on the inside of the windshield 2, i.e. the side of the windshield 2 facing the interior of the vehicle 1. This is carried out in a manner which will be described in greater detail below.

The invention is particularly intended to be used on road vehicles, primarily in the form of cars, trucks and buses and similar vehicles.

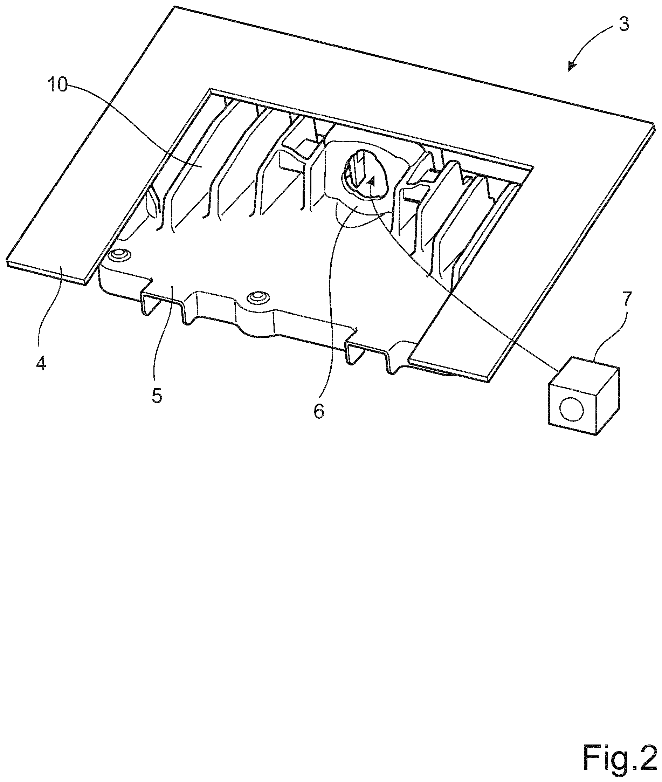

As shown in Figures 1 and 2, the carrier arrangement 3 comprises a base plate 4 which is formed as a generally U-shaped frame element. The base plate 4 is suitably provided with an adhesive for gluing it to the inside of the windshield 2.

Furthermore, the carrier arrangement 3 comprises a support device 5 which comprises a holder 6 which is configured for supporting a camera unit 7 or a similar device. The camera unit 7 is suitably of the type which is configured for supplying images or a video stream. For this reason, the camera unit 7 comprises an image sensor device, a lens and a control unit. Such components are well known in the field of camera technology, and for this reason they are not described in detail here. In this manner, the camera unit 7 can, for example, be used in a vehicle system for detection of road conditions, for speed control, for navigation, or in connection with systems for autonomous driving or similar fields of use. These fields of technology are mentioned here purely as examples.

Furthermore, it should be noted that the camera unit 7 is shown in Figure 2 separately and in a schematic manner since the camera unit 7 is normally marketed and sold as a piece of equipment which is separate from the carrier arrangement 3.

According to further embodiments, the support device 5 and holder 6 can be configured for supporting other units than a camera unit 7, for example a radar device or other types of sensors which can be suitable for detection systems in road vehicles.

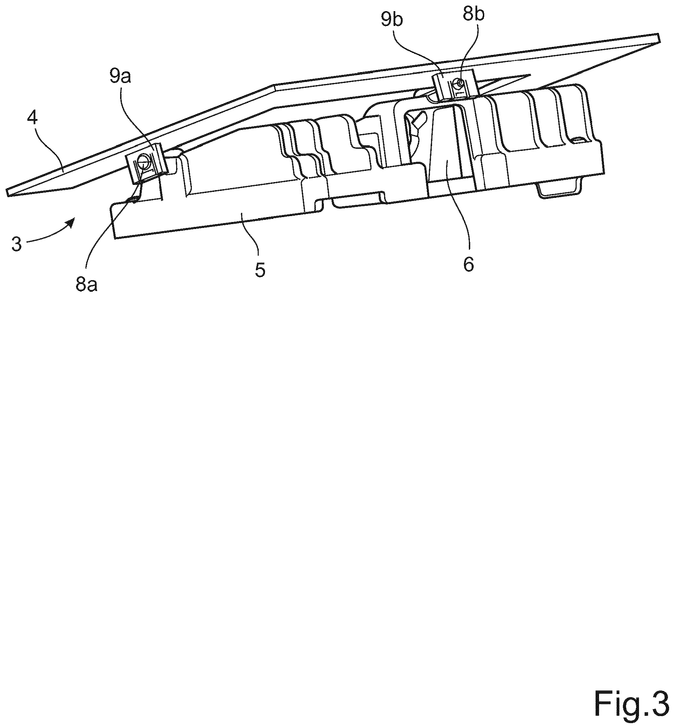

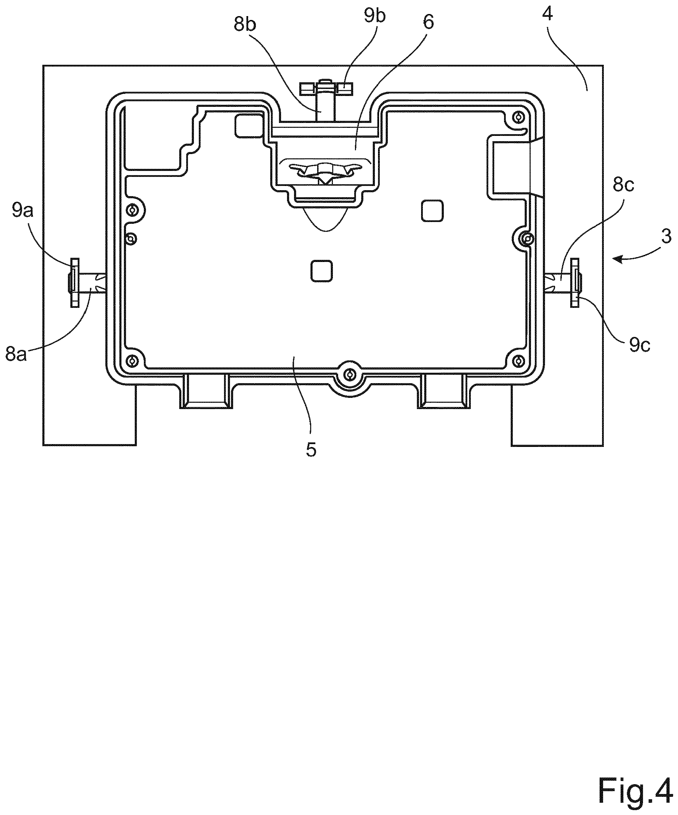

With particular reference to Figures 3 and 4, the carrier arrangement 3 comprises a fastening arrangement for attaching the support device 5 to the base plate 4. The fastening arrangement is constituted by a plurality of locking pins 8a, 8b, 8c which are arranged on the support device 5 and which are configured for cooperating with a corresponding number of fastening units 9a, 9b, 9c which are arranged on said base plate 4 in positions which correspond to the positions of the locking pins 8a, 8b, 8c. In particular, it should be noted that the pins 8a, 8b, 8c are shaped with a non-circular cross-section, as will be described in detail below.

As shown in particular in Figure 3, the fastening units 9a, 9b, 9c (one of which, i.e. the fastening unit 9c, is not visible in Figure 3) are arranged on the underside of the base plate 4 and extend in a direction downwards, i.e. in a direction away from the windshield 2 of the vehicle 1. Furthermore, the pins 8a, 8b, 8c are positioned along the periphery of said support device 5 and are configured for cooperating with the fastening units 9a, 9b, 9c.

Furthermore, as shown in Figures 2 and 3, the support device 5 is provided with a cooling arrangement in the form of a number of cooling fins 10 for absorbing heat which can be expected to be generated by the camera unit 7 during operation.

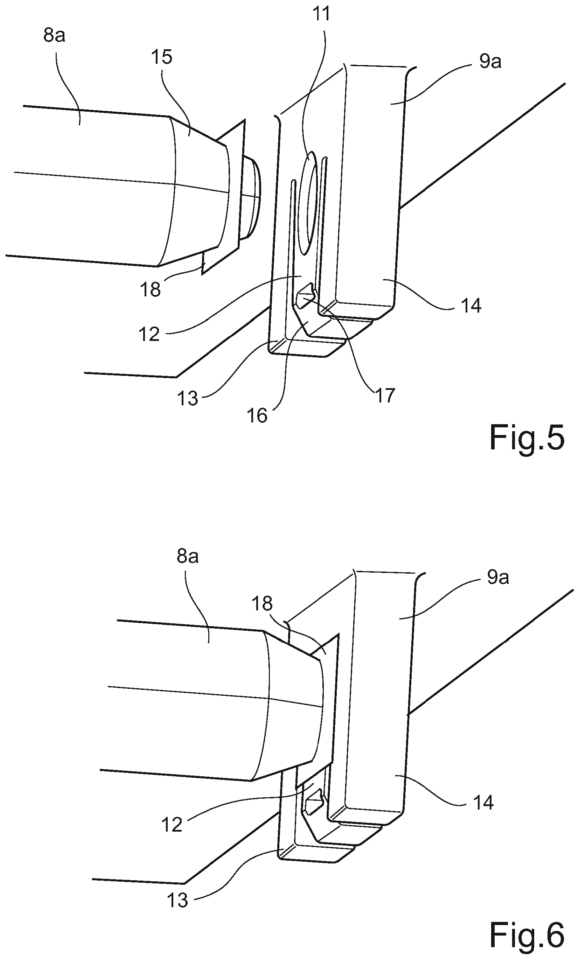

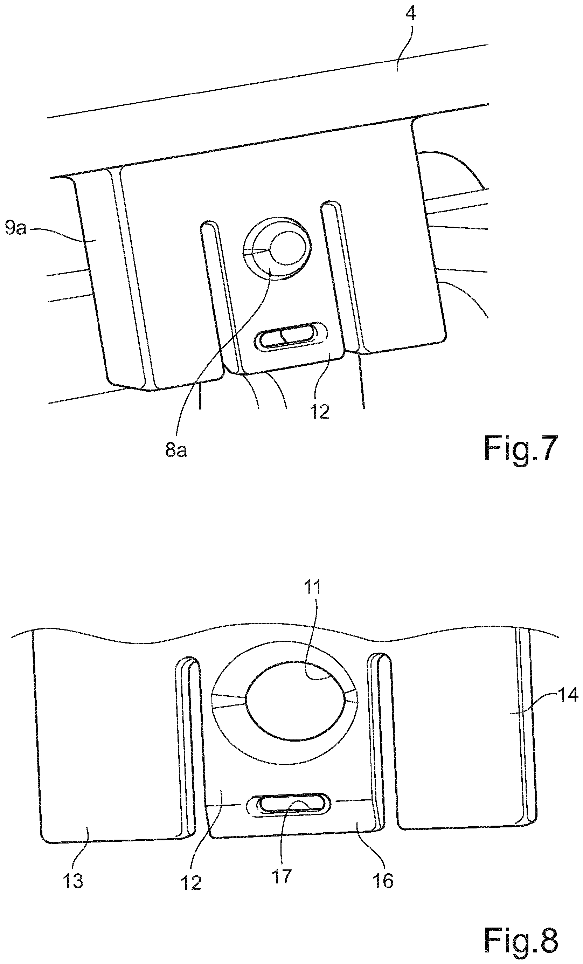

With reference to Figure 5, which shows one of the pins 8a and one of fastening units 9a before mounting of the support device 5, and also with reference to Figures 6 and 7, which show the pin 8a and fastening unit 9a after mounting, it can be noted that the fastening unit 9a comprises an opening 11 which is configured to allow insertion and fitting of the pin 8a. In order to simplify fitting of the pin 8a, the fastening unit 9a is flexible in a direction along the extension of the corresponding pin 8a so that said pin 8a can be pushed into place in the opening 11 while the fastening unit 9a flexes slightly. According to an embodiment, the opening 11 is conically shaped in order to allow locking of the pin 8a in its longitudinal direction. However, according to further embodiments, the opening 11 is not shaped in such a conical manner.

Each fastening unit 9a comprises a central section 12 and two side sections 13, 14 which together are formed as the letter "E", as shown in Figures 5 and 7. The central section 12 is resilient and arranged for flexing when pushed by the pin 8a, as mentioned above. However, the side sections 13, 14 are generally not moved when the pin 8a is pushed into place. Consequently, the central section 12 is resilient in a manner so as to allow easy mounting of the corresponding pin 8a.

Furthermore, the central section 12 comprises an inclined end surface 16 which is configured so that the pin 8a comes into contact with said surface 16 and forces the central section 12 to flex outwards (i.e. towards the right direction as regarded in Figure 5) so that the pin 8a can be easily fitted by snapping it into place in the opening 11. Figure 7 shows the mounted pin 8a extending out from the back side of the central section 12.

The mounting of the pin 8a is further simplified through the fact that said pin 8a has a tapering end surface 15 (see Figure 5) which fits easily into the opening 11 in the central section 12.

Figures 6 and 7 show the pin 8a and the fastening unit 9a in a condition in which these components are locked to each other.

The entire support device 5 is mounted in the base plate 4 by pushing it towards the base plate 4 while ensuring that each one of the pins 8a, 8b, 8c are positioned so that they are aligned with a corresponding fastening unit 9a, 9b, 9c. This is shown for example in Figures 3 and 4. When all the pins 8a, 8b, 8c have been pushed upwards so that they snap into their position in the corresponding fastening units 9a, 9b, 9c (as indicated in Figure 6), the support device 5 is securely mounted in its correct position in relation to the base plate 4.

Consequently, the support device 5 is mounted by pushing all the pins 8a, 8b, 8c generally simultaneously into a corresponding fastening unit 9a, 9b, 9c while pressing the support device 5 towards the inside of the windshield 2. In this manner, the carrier arrangement 1 will be attached very close to the windshield 2.

As shown for example in Figure 8, the central section 12 of the fastening unit 9a is formed with a further opening in the form of a slit 17 extending through the central opening 12. The slit 17 is dimensioned and positioned in such a manner so as to allow the opening 11 to expand slightly depending on the dimensions of the pin 8a during insertion thereof in the opening 11. This simplifies the attachment of the support device 5 to the base plate 4. It also makes the camera unit 7 remain in the same position relative to the windshield 2 since the opening 11 is expanded downwards and the upper surface of the pin 8a facing the windscreen 2 stays in the same position. Furthermore, the fact that the slit 17 is provided also allows bigger tolerances of the pin 8a and the hole 11.

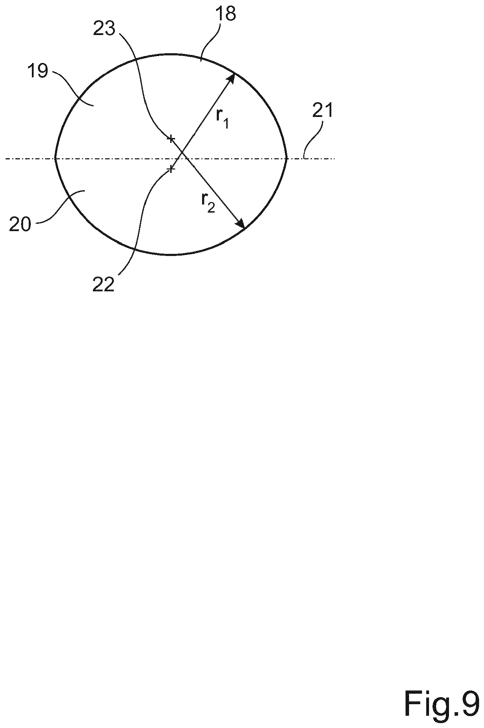

Figure 9 is a cross-sectional view of the pin 8a, as taken along the imaginary plane 18 which is shown in Figure 5 and which is also shown in a schematic manner in Figure 9. As shown in Figure 9, the pin 8a is shaped with a non-circular cross-section. More precisely, the pin 8a has a cross-section with an upper section 19 and a lower section 20 which are divided along a horizontal plane 21. The upper section 19 has a first radius r1 whereas the lower section 20 has a second radius r2. According to an embodiment, the first radius r1 is different from the second radius r2.

According to an embodiment, the opening 11 in the fastening unit 9a is shaped in a corresponding manner, as shown for example in Figure 9.

Through the fact that the pin 8a (and opening 11) has a non-circular cross-section, the carrier arrangement 3 can be configured so that it allow an easy attachment of the support device 5 and so that the camera unit 7 comes very close to the windshield 2. More precisely, the carrier arrangement 1 will be mounted closer to the windshield 2 than previously known arrangements. In other words, it will occupy very little space in the vehicle compartment. Also, the height which is available for tall persons to obtain a clear view out through the windshield 2 will be increased since the carrier arrangement 1 is attached at a relatively high position on the windshield 2.

According to an embodiment, the first radius r1 is in the magnitude of 3,0 mm and the second radius r2 is in the magnitude of 2,9 mm. Both the first radius r1 and the second radius r2 can be varied within the scope of the invention, however with the general principle, as shown in Fig. 9, that the center 22 of the upper cylindrical surface is positioned below the center 23 of the lower cylindrical surface of the opening 11.

The carrier arrangement 3 according to this disclosure is mounted in the following manner.

Firstly, the base plate 4 is attached to the windshield 2 of the vehicle 1 in question. According to an embodiment, this is carried out by providing the base plate 4 with a suitable adhesive so as to allow the base plate 4 to be glued to the windshield 2.

Secondly, the support device 5 is mounted to the base plate 4 by means of the fastening arrangement involving the pins 8a, 8b, 8c and the fastening units 9a, 9b, 9c, in a manner as described above. More precisely, this is allowed through the fact that said fastening arrangement comprises a plurality of pins 8a, 8b, 8c arranged on the support device 5 and configured for cooperating with corresponding fastening units 9a, 9b, 9c arranged on the base plate 4.

Finally, the attachment of the support device 5 is optimized through the fact that the pins 8a, 8b, 8c are shaped with a non-circular cross-section.

The present disclosure is not limited to the examples above, but may vary freely within the scope of the appended claims. For example, the disclosure may relate to different types of vehicles and also different types of a camera units.

Generally, and with reference to the appended drawings, the present disclosure relates to a carrier arrangement 3 for mounting a camera unit 7 on a vehicle 1, said carrier arrangement 3 comprising a base plate 4 configured to be attached to a windshield 2 of said vehicle 1 and a support device 5 for carrying said camera unit 7, said support device 5 and said base plate 4 being associated with a fastening arrangement 8a, 8b, 8c, 9a, 9b, 9c for attaching the support device 5 to the base plate 4. The fastening arrangement 8a, 8b, 8c, 9a, 9b, 9c comprises a plurality of pins 8a, 8b, 8c arranged on said support device 5 and configured for cooperating with corresponding fastening units 9a, 9b, 9c arranged on said base plate 4, wherein at least one of said pins 8a, 8b, 8c is shaped with a non-circular cross-section.

According to some aspects, each pin 8a, 8b, 8c is shaped with a cross-section having an upper section 19 and a lower section 20 which are divided by means of a horizontal plane 21, said upper section 19 of the cross-section having a first radius r1 and said lower section of the cross-section 20 having a second radius r2 which is different from the first radius r2.

According to some aspects, the first radius r1 is in the magnitude of 3,0 mm and the second radius r2 is in the magnitude of 2,9 mm.

According to some aspects, each of said pins 8a, 8b, 8c is shaped with a tapering end section 15.

According to some aspects, each of said fastening units 9a, 9b, 9c is flexible in a direction along the extension of each corresponding pin 8a, 8b, 8c when being forced by said pin 8a, 8b, 8c.

According to some aspects, each fastening unit 9a has an opening 11 which is configured for fitting a corresponding pin 8a.

According to some aspects, each fastening unit 9a comprises a central section 12 and two side sections 13, 14 on each side of the central section 12, said central section 12 being resilient and configured for flexing during mounting of a corresponding pin 8a.

According to some aspects, each central section 12 comprises a further opening 17 in the central section 12, said further opening being configured for allowing expansion of said hole 11 during mounting of the pin 8a.

According to some aspects, the central section 12 comprises a tapering end surface 16 configured for being in contact with the pin 8a during mounting thereof so as to allow said flexing.

According to some aspects, said support device 5 comprises a cooling arrangement 10.

According to some aspects, said support device 5 comprises a holder 6 which is configured for supporting said camera unit 7.

According to some aspects, said base plate 4 is provided with an adhesive for fixing it to said windshield 2.

According to some aspects, the fastening units 8a, 8b, 8c are arranged on the underside of the base plate 4.

According to some aspects, the pins 8a, 8b, 8c are arranged along the periphery of said support device 5.

The present disclosure also relates to a method for installing a carrier arrangement 3 for a camera unit 7 in a vehicle 1, said method comprising: attaching a base plate 4 to a windshield 2 of said vehicle 1; and mounting a support device 5 to said base plate 4 by means of a fastening arrangement 8a, 8b, 8c, 9a, 9b, 9c. Said method further comprises: mounting said support device 5 by installing said fastening arrangement 8a, 8b, 8c, 9a, 9b, 9c having a plurality of pins 8a, 8b, 8c arranged on said support device 5 and configured for cooperating with corresponding fastening units 9a, 9b, 9c arranged on said base plate 4; wherein at least one of said pins 8a, 8b, 8c is shaped with a non-circular cross-section.

## Claims

1. A carrier arrangement (3) for mounting a camera unit (7) on a vehicle (1), said carrier arrangement (3) comprising a base plate (4) configured to be attached to a windshield (2) of said vehicle (1) and a support device (5) for carrying said camera unit (7), said support device (5) and said base plate (4) being associated with a fastening arrangement (8a, 8b, 8c, 9a, 9b, 9c) for attaching the support device (5) to the base plate (4), wherein said fastening arrangement (8a, 8b, 8c, 9a, 9b, 9c) comprises a plurality of pins (8a, 8b, 8c) arranged on said support device (5) and configured for cooperating with corresponding fastening units (9a, 9b, 9c) arranged on said base plate (4), wherein at least one of said pins (8a, 8b, 8c) is shaped with a non-circular cross-section and wherein each fastening unit (9a) has an opening hole (11) which is configured for fitting a corresponding pin (8a), **characterized in that** each of said fastening units (9a, 9b, 9c) is flexible in a direction along the extension of each corresponding pin (8a, 8b, 8c) when being forced by said pin (8a, 8b, 8c); that each fastening unit (9a) comprises a central section (12) and two side sections (13, 14) on each side of the central section (12), said central section (12) being resilient and configured for flexing during mounting of a corresponding pin (8a); and that each central section (12) comprises a further opening (17) in the central section (12), said further opening being configured for allowing expansion of said hole (11) during mounting of the pin (8a).

2. A carrier arrangement according to claim 1, **characterized in that** each pin (8a, 8b, 8c) is shaped with a cross-section having an upper section (19) and a lower section (20) which are divided by means of a horizontal plane (21), said upper section (19) of the cross-section having a first radius (r1) and said lower section of the cross-section (20) having a second radius (r2) which is different from the first radius (r2).

3. A carrier arrangement (3) according to claim 2, **characterized in that** the first radius (r1) is in the magnitude of 3,0 mm and the second radius (r2) is in the magnitude of 2,9 mm.

4. A carrier arrangement (3) according to any one of the preceding claims, **characterized in that** each of said pins (8a, 8b, 8c) is shaped with a tapering end section (15).

5. A carrier arrangement (3) according to any one of the preceding claims, **characterized in that** said central section (12) comprises a tapering end surface (16) configured for being in contact with the pin (8a) during mounting thereof so as to allow said flexing.

6. A carrier arrangement (3) according to any one of the preceding claims, **characterized in that** said support device (5) comprises a cooling arrangement (10).

7. A carrier arrangement (3) according to any one of the preceding claims, **characterized in that** said support device (5) comprises a holder (6) which is configured for supporting said camera unit (7).

8. A carrier arrangement (3) according to any one of the preceding claims, **characterized in that** said base plate (4) is provided with an adhesive for fixing it to said windshield (2).

9. A carrier arrangement according to any one of the preceding claims, **characterized in that** the fastening units (8a, 8b, 8c) are arranged on the underside of the base plate (4).

10. A carrier arrangement (3) according to any one of the preceding claims, **characterized in that** the pins (8a, 8b, 8c) are arranged along the periphery of said support device (5).

11. A method for installing a carrier arrangement (3) for a camera unit (7) in a vehicle (1), said method comprising:
attaching a base plate (4) to a windshield (2) of said vehicle (1); and
mounting a support device (5) to said base plate (4) by means of a fastening arrangement (8a, 8b, 8c, 9a, 9b, 9c); wherein said method further comprises:
mounting said support device (5) by installing said fastening arrangement (8a, 8b, 8c, 9a, 9b, 9c) having a plurality of pins (8a, 8b, 8c) arranged on said support device (5) and configured for cooperating with corresponding fastening units (9a, 9b, 9c) arranged on said base plate (4);
wherein at least one of said pins (8a, 8b, 8c) is shaped with a non-circular cross-section and wherein each fastening unit (9a) has an opening hole (11) which is configured for fitting a corresponding pin (8a); **characterized in that** said method further comprises:
flexing each of said fastening units (9a, 9b, 9c) in a direction along the extension of each corresponding pin (8a, 8b, 8c) when being forced by said pin (8a, 8b, 8c), wherein each fastening unit (9a) comprises a central section (12) and two side sections (13, 14) on each side of the central section (12), said central section (12) being resilient and configured for flexing during said mounting of a corresponding pin (8a); and
mounting said pin (8a) by allowing expansion of said hole (11) by means of a further opening (17) provided in the central section.

## Patentansprüche

1. Trägeranordnung (3) zur Montage einer Kameraeinheit (7) an einem Fahrzeug (1), wobei die Trägeranordnung (3) eine Grundplatte (4), die konfiguriert ist, um an einer Windschutzscheibe (2) des Fahrzeugs (1) angebracht zu werden, und eine Haltevorrichtung (5) zum Tragen der Kameraeinheit (7) umfasst, wobei die Haltevorrichtung (5) und die Grundplatte (4) mit einer Befestigungsanordnung (8a, 8b, 8c, 9a, 9b, 9c) zum Anbringen der Haltevorrichtung (5) an der Grundplatte (4) verbunden sind, wobei die Befestigungsanordnung (8a, 8b, 8c, 9a, 9b, 9c) eine Vielzahl von Stiften (8a, 8b, 8c) umfasst, die auf der Haltevorrichtung (5) angeordnet sind und zum Zusammenwirken mit entsprechenden auf der Grundplatte (4) angeordneten Befestigungseinheiten (9a, 9b, 9c) konfiguriert sind, wobei mindestens einer der Stifte (8a, 8b, 8c) mit einem nicht kreisförmigen Querschnitt geformt ist und wobei jede Befestigungseinheit (9a) ein Öffnungsloch (11) aufweist, das zum Einpassen eines entsprechenden Stifts (8 a) konfiguriert ist, **dadurch gekennzeichnet, dass** jede der Befestigungseinheiten (9a, 9b, 9c) in einer Richtung entlang des Verlaufs jedes entsprechenden Stifts (8a, 8b, 8c) flexibel ist, wenn sie durch den Stift (8a, 8b, 8c) gedrückt wird; dass jede Befestigungseinheit (9a) einen mittleren Bereich (12) und zwei Seitenbereiche (13, 14) auf jeder Seite des mittleren Bereichs (12) umfasst, wobei der mittlere Bereich (12) nachgiebig ist und konfiguriert ist, um sich während der Montage eines entsprechenden Stifts (8a) zu biegen; und dass jeder mittlere Bereich (12) eine weitere Öffnung (17) in dem mittleren Bereich (12) umfasst, wobei die weitere Öffnung konfiguriert ist, um eine Ausdehnung des Lochs (11) während der Montage des Stifts (8a) zu ermöglichen.

2. Trägeranordnung nach Anspruch 1, **dadurch gekennzeichnet, dass** jeder Stift (8a, 8b, 8c) mit einem Querschnitt geformt ist, der einen oberen Bereich (19) und einen unteren Bereich (20) aufweist, die mittels einer horizontalen Ebene (21) geteilt sind, wobei der obere Bereich (19) des Querschnitts einen ersten Radius (rl) aufweist und der untere Bereich des Querschnitts (20) einen zweiten Radius (r2) aufweist, der sich von dem ersten Radius (r2) unterscheidet.

3. Trägeranordnung (3) nach Anspruch 2, **dadurch gekennzeichnet, dass** der erste Radius (rl) in der Größenordnung von 3,0 mm liegt und der zweite Radius (r2) in der Größenordnung von 2,9 mm liegt.

4. Trägeranordnung (3) nach einem der vorstehenden Ansprüche, **dadurch gekennzeichnet, dass** jeder der Stifte (8a, 8b, 8c) mit einem sich verjüngenden Endbereich (15) geformt ist.

5. Trägeranordnung (3) nach einem der vorstehenden Ansprüche, **dadurch gekennzeichnet, dass** der mittlere Bereich (12) eine sich verjüngende Endoberfläche (16) umfasst, die konfiguriert ist, um während der Montage des Stifts (8a) mit diesem in Kontakt steht, um das Biegen zu ermöglichen.

6. Trägeranordnung (3) nach einem der vorstehenden Ansprüche, **dadurch gekennzeichnet, dass** die Haltevorrichtung (5) eine Kühlanordnung (10) umfasst.

7. Trägeranordnung (3) nach einem der vorstehenden Ansprüche, **dadurch gekennzeichnet, dass** die Haltevorrichtung (5) eine Halterung (6) umfasst, die zum Halten der Kameraeinheit (7) konfiguriert ist.

8. Trägeranordnung (3) nach einem der vorstehenden Ansprüche, **dadurch gekennzeichnet, dass** die Grundplatte (4) mit einem Klebstoff versehen ist, um sie an der Windschutzscheibe (2) zu befestigen.

9. Trägeranordnung nach einem der vorstehenden Ansprüche, **dadurch gekennzeichnet, dass** die Befestigungseinheiten (8a, 8b, 8c) an der Unterseite der Grundplatte (4) angeordnet sind.

10. Trägeranordnung (3) nach einem der vorstehenden Ansprüche, **dadurch gekennzeichnet, dass** die Stifte (8a, 8b, 8c) entlang des Umfangs der Haltevorrichtung (5) angeordnet sind.

11. Verfahren zum Installieren einer Trägeranordnung (3) für eine Kameraeinheit (7) in einem Fahrzeug (1), wobei das Verfahren umfasst:
Befestigen einer Grundplatte (4) an einer Windschutzscheibe (2) des Fahrzeugs (1); und
Montieren einer Haltevorrichtung (5) an der Grundplatte (4) mittels einer Befestigungsanordnung (8a, 8b, 8c, 9a, 9b, 9c); wobei das Verfahren ferner umfasst:
Montieren der Haltevorrichtung (5) durch Installieren der Befestigungsanordnung (8a, 8b, 8c, 9a, 9b, 9c), die eine Vielzahl von Stiften (8a, 8b, 8c) aufweist, die auf der Haltevorrichtung (5) angeordnet sind und zum Zusammenwirken mit entsprechenden Befestigungseinheiten (9a, 9b, 9c) konfiguriert sind, die an der Grundplatte (4) angeordnet sind;
wobei mindestens einer der Stifte (8a, 8b, 8c) mit einem nicht kreisförmigen Querschnitt geformt ist und wobei jede Befestigungseinheit (9a) ein Öffnungsloch (11) aufweist, das zum Einpassen eines entsprechenden Stifts (8a) konfiguriert ist; **dadurch gekennzeichnet, dass** das Verfahren ferner umfasst:
Biegen jeder der Befestigungseinheiten (9a, 9b, 9c) in einer Richtung entlang des Verlaufs jedes entsprechenden Stifts (8a, 8b, 8c), wenn sie durch den Stift (8a, 8b, 8c) gedrückt wird, wobei jede Befestigungseinheit (9a) einen mittleren Bereich (12) und zwei Seitenbereiche (13, 14) auf jeder Seite des mittleren Bereichs (12) umfasst, wobei der mittlere Bereich (12) nachgiebig ist und konfiguriert ist, um sich während der Montage eines entsprechenden Stifts (8a) zu biegen; und
Montieren des Stifts (8a) durch Ermöglichen einer Ausdehnung des Lochs (11) mittels einer weiteren Öffnung (17), die in dem mittleren Bereich vorgesehen ist.

## Revendications

1. Agencement de support (3) pour le montage d'une unité de caméra (7) sur un véhicule (1), ledit agencement de support (3) comprenant une plaque de base (4) conçue pour être fixée à un pare-brise (2) dudit véhicule (1) et un dispositif de support (5) pour supporter ladite unité de caméra (7), ledit dispositif de support (5) et ladite plaque de base (4) étant associés à un agencement de fixation (8a, 8b, 8c, 9a, 9b, 9c) pour fixer le dispositif de support (5) à la plaque de la base (4), dans lequel ledit agencement de fixation (8a, 8b, 8c, 9a, 9b, 9c) comprend une pluralité de goupilles (8a, 8b, 8c) disposées sur ledit dispositif de support (5) et conçues pour coopérer avec des unités de fixation correspondantes (9a, 9b, 9c) agencées sur ladite plaque de base (4), dans lequel au moins l'une parmi lesdites goupilles (8a, 8b, 8c) est façonnée selon une coupe transversale non-circulaire et dans lequel chaque unité de fixation (9a) présente un orifice d'ouverture (11) qui est conçu pour recevoir une goupille (8a) correspondante, **caractérisé en ce que** chacune desdites unités de fixation (9a, 9b, 9c) est flexible dans une direction le long de l'extension de chaque goupille correspondante (8a, 8b, 8c) lorsqu'elle est poussée par ladite goupille (8a, 8b, 8c) ; **en ce que** chaque unité de fixation (9a) comprend une section centrale (12) et deux sections latérales (13, 14) de chaque côté de la section centrale (12), ladite section centrale (12) étant élastique et configurée pour se fléchir pendant le montage d'une goupille correspondante (8a) ; et **en ce que** chaque section centrale (12) comprend une ouverture ultérieure (17) dans la section centrale (12), ladite ouverture ultérieure étant conçue pour permettre une expansion dudit trou (11) lors du montage de la goupille (8a).

2. Agencement de support selon la revendication 1, **caractérisé en ce que** chaque goupille (8a, 8b, 8c) est façonnée en une coupe transversale présentant une section supérieure (19) et une section inférieure (20) qui sont divisées au moyen d'un plan horizontal (21), ladite section supérieure (19) de la coupe transversale présentant un premier rayon (r1) et ladite section inférieure de la coupe transversale (20) présentant un deuxième rayon (r2) qui est différent du premier rayon (r2).

3. Agencement de support (3) selon la revendication 2, **caractérisé en ce que** le premier rayon (r1) est de l'ordre de 3,0 millimètres et le deuxième rayon (r2) est de l'ordre de 2,9 millimètres.

4. Agencement de support (3) selon l'une quelconque des revendications précédentes, **caractérisé en ce que** chacune desdites goupilles (8a, 8b, 8c) est façonnée avec une section d'extrémité effilée (15).

5. Agencement de support (3) selon l'une quelconque des revendications précédentes, **caractérisé en ce que** ladite section centrale (12) comprend une surface d'extrémité effilée (16) configurée pour être en contact avec la goupille (8a) pendant son montage de manière à permettre ladite flexion.

6. Agencement de support (3) selon l'une quelconque des revendications précédentes, **caractérisé en ce que** ledit dispositif de support (5) comprend un agencement de refroidissement (10).

7. Agencement de support (3) selon l'une quelconque des revendications précédentes, **caractérisé en ce que** ledit dispositif de support (5) comprend un support (6) qui est configuré pour supporter ladite unité de caméra (7).

8. Agencement de support (3) selon l'une quelconque des revendications précédentes, **caractérisé en ce que** ladite plaque de base (4) est pourvue d'un adhésif pour sa fixation sur ledit pare-brise (2).

9. Agencement de support selon l'une quelconque des revendications précédentes, **caractérisé en ce que** les unités de fixation (8a, 8b, 8c) sont disposées sur la face inférieure de la plaque de base (4).

10. Agencement de support (3) selon l'une quelconque des revendications précédentes, **caractérisé en ce que** les goupilles (8a, 8b, 8c) sont disposées le long de la périphérie dudit dispositif de support (5).

11. Procédé d'installation d'un agencement de support (3) pour une unité de caméra (7) dans un véhicule (1), ledit procédé comprenant :
la fixation d'une plaque de base (4) à un pare-brise (2) dudit véhicule (1) ; et
le montage d'un dispositif de support (5) sur ladite plaque de base (4) au moyen d'un agencement de fixation (8a, 8b, 8c, 9a, 9b, 9c) ; dans lequel ledit procédé comprenant en outre :
le montage dudit dispositif de support (5) en installant ledit agencement de fixation (8a, 8b, 8c, 9a, 9b, 9c) présentant une pluralité de goupilles (8a, 8b, 8c) disposées sur ledit dispositif de support (5) et configurées pour coopérer avec des unités de fixation correspondantes (9a, 9b, 9c) disposées sur ladite plaque de base (4) ;
dans lequel au moins l'une desdites goupilles (8a, 8b, 8c) a une forme de section transversale non circulaire et dans lequel chaque unité de fixation (9a) présente un orifice d'ouverture (11) qui est configuré pour recevoir une goupille correspondante (8a) ; **caractérisé en ce que** ledit procédé comprend en outre :
la flexion de chacune desdites unités de fixation (9a, 9b, 9c) dans une direction le long de l'extension de chaque goupille correspondante (8a, 8b, 8c) lorsqu'elle est poussée par ladite goupille (8a, 8b, 8c), dans lequel chaque unité de fixation (9a) comprend une section centrale (12) et deux sections latérales (13, 14) de chaque côté de la section centrale (12), ladite section centrale (12) étant élastique et configurée pour se fléchir pendant ledit montage d'une goupille correspondante (8a) ; et
le montage de ladite goupille (8a) en permettant l'expansion dudit orifice (11) au moyen d'une autre ouverture (17) ménagée dans la section centrale.
